# EUROPÄISCHE PATENTANMELDUNG

(11) **EP 3 905 388 A1**
(43) Veröffentlichungstag der Anmeldung: **03.11.2021**
(21) Anmeldenummer: 20172155.2
(22) Anmeldetag: 29.04.2020
(51) Int. Cl.: H01M 4/13, H01M 10/052

(54) **SEKUNDÄRE ELEKTROCHEMISCHE LITHIUM-IONEN-ZELLE**

(71) Anmelder: VARTA Microbattery GmbH, 73479 Ellwangen Jagst (DE)
(72) Erfinder: Chumak, Ihor, 73479 Ellwangen (DE); Ensling, David, 73479 Ellwangen (DE); Pytlik, Edward, 73479 Ellwangen (DE)
(74) Vertreter: Patentanwaltskanzlei Cartagena

(57) **Zusammenfassung**

Eine sekundäre elektrochemische Lithium-Ionen-Zelle umfasst wenigstens eine Kompositelektrode als negative Elektrode (10), wobei die Kompositelektrode wenigstens einen Anodenstromkollektor (12) und wenigstens eine elektrochemisch aktive Komponente, die Lithium-Ionen ein- und auszulagern vermag, umfasst. Weiterhin umfasst die Lithium-Ionen-Zelle wenigstens eine Kompositelektrode als positive Elektrode (20), wobei die Kompositelektrode wenigstens einen Kathodenstromkollektor (22) und wenigstens eine elektrochemisch aktive Komponente, die Lithium-Ionen ein- und auszulagern vermag, umfasst. Weiterhin weisen die negative Elektrode (10) und/oder die positive Elektrode (20) wenigstens einen Bereich (11) auf, in dem der Anodenstromkollektor (12) und/oder der Kathodenstromkollektor (22) zumindest teilweise frei von der elektrochemisch aktiven Komponente ist und wobei dieser Bereich (11) als Lithium-Reserve ausgebildet ist.

## Beschreibung

Die vorliegende Erfindung betrifft eine sekundäre elektrochemische Lithium-Ionen-Zelle sowie einen aus negativer und positiver Elektrode gebildeten Wickel oder Stapel für eine sekundäre elektrochemische Lithium-Ionen-Zelle sowie ein Verfahren zur Herstellung eines solchen Wickels oder Stapels und ein Verfahren zur Herstellung einer sekundären elektrochemischen Lithium-Ionen-Zelle.

Elektrochemische Zellen sind dazu in der Lage, gespeicherte chemische Energie durch eine Redoxreaktion in elektrische Energie umzuwandeln. Die elektrochemischen Zellen umfassen in der Regel eine positive und eine negative Elektrode. Bei einer Entladung werden an der negativen Elektrode durch einen Oxidationsprozess Elektronen freigesetzt. Hieraus resultiert ein Elektronenstrom, der von einem externen Verbraucher abgegriffen werden kann, so dass die elektrochemische Zelle als Energielieferant wirkt. Zugleich kommt es zu einem der Elektrodenreaktion entsprechenden lonenstrom innerhalb der Zelle. Dieser lonenstrom wird durch einen Ionen leitenden Elektrolyten ermöglicht.

Wenn die Entladung reversibel ist, spricht man von einer sekundären Zelle, wobei also die Möglichkeit besteht, die bei der Entladung erfolgte Umwandlung von chemischer Energie in elektrische Energie wieder umzukehren und damit die Zelle zu laden. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Die weit verbreiteten Lithium-Ionen-Zellen basieren auf dem Einsatz von Lithium, welches in Ionenform zwischen den Elektroden der Zelle hin und herwandern kann. Die Lithium-Ionen-Zellen zeichnen sich dabei durch eine vergleichsweise hohe Energiedichte aus. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) kommen prinzipiell sämtliche Materialien infrage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen.

So sind beispielsweise die Elemente Zinn, Antimon und Silizium in der Lage, mit Lithium intermetallische Phasen zu bilden. Als Aktivmaterialien für die positive Elektrode können beispielsweise Lithiumcobaltoxid (LiCoO₂), Lithiummanganoxid (LiMn₂O₄) oder Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der mit dem Aktivmaterial beschichtet ist. Der Stromkollektor für die negative Elektrode (Anodenstromkollektor) kann beispielsweise aus Kupfer oder Nickel und der Stromkollektorfür die positive Elektrode (Kathodenstromkollektor) beispielsweise ausAluminium gebildet sein. Weiterhin können die Elektroden einen Elektrodenbinder (z. B. Polyvinylidenfluorid (PVDF) oder ein anderes Polymer) umfassen. Dieser gewährleistet die mechanische Stabilität der Elektroden und häufig auch die Haftung des Aktivmaterials auf den Stromkollektoren. Weiterhin können die Elektroden leitfähigkeitsverbessernde Additive und andere Zusätze enthalten.

Als gängige Elektrolytlösungen für Lithium-Ionen-Zellen werden zum Beispiel Lösungen von Lithiumsalzen wie Lithiumhexafluorophosphat (LiPF₆) in organischen Lösungsmitteln (z. B. Ether und Ester der Kohlensäure) verwendet.

Die Kompositelektroden werden bei der Herstellung einer Lithium-Ionen-Zelle oftmals zu einem Stapel oder einem Wickels verarbeitet, wobei innerhalb des Stapels oder des Wickels die negative Elektrode(n) und die positive Elektrode(n) mittels eines Separators voneinander getrennt sind.

Zur elektrischen Kontaktierung der negativen und positiven Elektroden können Stromleiter vorgesehen sein, die mit den Stromkollektoren beispielsweise durch Verschweißung verbunden sind. Gegebenenfalls kann auch eine direkte Kontaktierung der Stromkollektoren mit einem Gehäuseteil der Lithium-Ionen-Zelle vorgenommen werden.

Die Funktion einer Lithium-Ionen-Zelle basiert darauf, dass ausreichend mobile Lithiumionen (mobiles Lithium) zurVerfügungstehen, um durch Wanderungzwischen der Anode und der Kathode bzw. der negativen Elektrode und der positiven Elektrode den abgegriffenen elektrischen Strom auszugleichen. Unter mobilem Lithium im Rahmen dieser Anmeldung ist zu verstehen, dass das Lithium für Ein- und Auslagerungsvorgänge in den Elektroden im Rahmen der Entlade- und Ladevorgänge der Lithium-Ionen-Zelle zur Verfügung steht oder hierfür aktiviert werden kann. Im Zuge der ablaufenden Entlade- und Ladeprozesse einer Lithium-Ionen-Zelle kommt es im Laufe der Zeit zu Verlusten an mobilem Lithium. Diese Verluste treten in Folge von verschiedenen, in der Regel nicht vermeidbaren Nebenreaktionen auf. Bereits im Rahmen des ersten Lade- und Entladezyklus einer Lithium-Ionen-Zelle kommt es zu Verlusten an mobilem Lithium. Bei diesem ersten Lade- und Entladezyklus bildet sich in der Regel eine Deckschicht auf der Oberfläche der elektrochemisch aktiven Komponenten an der negativen Elektrode. Diese Deckschicht wird als *Solid Electrolyte Interphase* (SEI) bezeichnet und besteht in der Regel vor allem aus Elektrolytzersetzungsprodukten sowie einer gewissen Menge an Lithium, das in dieser Schicht fest gebunden ist. Der mit diesem Vorgang verbundene Verlust an mobilem Lithium kann zwischen 10 % bis 35 % betragen. Die Verluste in den folgenden Lade- und Entladezyklen sind deutlich geringer. Aber dennoch kommt es im Laufe der Zeit durch den fortlaufenden Verlust an mobilem Lithium zu einer kontinuierlich fortschreitenden Kapazitäts- und Leistungsabnahme herkömmlicher Lithium-Ionen-Zellen.

Es sind bereits verschiedene Ansätze bekannt, um den auftretenden Verlust an mobilem Lithium auszugleichen. So beschreibt beispielsweise die EP 2 486 620 B1 eine Lithium-Ionen-Zelle mit verbessertem Alterungsverhalten, wobei die Kapazität der negativen Elektrode zur Aufnahme von Lithium im Verhältnis zur positiven Elektrode und gleichzeitig im Verhältnis zum gesamten mobilen Lithium überdimensioniert ist. Gleichzeitig ist in der Zelle eine Menge an mobilem Lithium enthalten, die die Kapazität der positiven Elektrode zur Aufnahme von Lithium überschreitet.

Die EP 3 255 714 A1 offenbart eine elektrochemische Zelle mit Lithium-Depot, wobei das Lithium-Depot in Form einer Lithium-Legierung in der Zelle bereitgestellt wird. Das Lithium-Depot kann beispielsweise zwischen den Elektroden und dem Gehäuse der Zelle angeordnet sein.

Die EP 2 372 732 A1 beschreibt einen spiralförmig gewundenen Wickel mit negativer und positiver Elektrode für eine elektrochemische Lithium-Ionen-Zelle, wobei innerhalb des Wickels eine Lithium-Ionen-Quelle vorgesehen ist, die mittels eines Separators so von der positiven Elektrode und der negativen Elektrode getrennt ist, dass sie mit den Elektroden nicht in Kontakt kommt.

Die Erfindung stellt sich demgegenüber die Aufgabe, eine verbesserte Lithium-Ionen-Zelle bereitzustellen, bei der Verluste an mobilem Lithium in besonders vorteilhafter Weise ausgeglichen werden können. Mit dieser verbesserten Lithium-Ionen-Zelle sollen Alterungsprozesse der Zelle verhindert oder verlangsamt werden, um so eine besonders lange Lebensdauer der Zelle zu erreichen.

Diese Aufgabe wird durch eine sekundäre elektrochemische Lithium-Ionen-Zelle und einen Wickel oder Stapel für eine sekundäre elektrochemische Lithium-Ionen-Zelle, wie sie aus den unabhängigen Ansprüchen hervorgehen, gelöst. Weiterhin wird diese Aufgabe durch ein Verfahren zur Herstellung eines derartigen Wickels oder Stapels und durch ein Verfahren zur Herstellung einer elektrochemischen Lithium-Ionen-Zelle gemäß den weiteren unabhängigen Ansprüchen gelöst. Bevorzugte Ausgestaltungen dieser Lithium-Ionen-Zelle bzw. des Wickels oder Stapels und der Herstellungsverfahren ergeben sich aus den abhängigen Ansprüchen.

Die erfindungsgemäße Lithium-Ionen-Zelle zeichnet sich stets durch die folgenden Merkmale aus:
a. Sie umfasst wenigstens eine Kompositelektrode als negative Elektrode, wobei die Kompositelektrode wenigstens einen Anodenstromkollektor und wenigstens eine elektrochemisch aktive Komponente, die Lithiumionen ein- und auszulagern vermag, umfasst.
b. Sie umfasst wenigstens eine Kompositelektrode als positive Elektrode, wobei die Kompositelektrode wenigstens einen Kathodenstromkollektor und wenigstens eine elektrochemisch aktive Komponente, die Lithiumionen ein- und auszulagern vermag, umfasst.

Besonders zeichnet sie sich durch das folgende Merkmal aus:
c. die negative Elektrode und/oder die positive Elektrode weist oder weisen wenigstens einen Bereich auf, in dem der Anodenstromkollektor und/oder der Kathodenstromkollektor zumindest teilweise frei von der elektrochemisch aktiven Komponente ist, wobei dieser Bereich als Lithium-Reserve ausgebildet ist.

Die negative Elektrode und/oder die positive Elektrode umfassen also einen Stromkollektor mit mindestens einem Bereich, der von einer elektrochemisch aktiven Komponente bedeckt ist, und mindestens einem weiteren Bereich, der frei von dieser Komponente und der als Lithium-Reserve ausgebildet ist.

Vorzugsweise ist der als Lithium-Reserve ausgebildete Bereich vollständig frei von der elektrochemisch aktiven Komponente.

Bevorzugt ist der Bereich auch frei von dem erwähnten Elektrodenbinder und/oder den erwähnten leitfähigkeitsverbessernden Additiven.

Mit einer Lithium-Reserve ist in diesem Zusammenhang gemeint, dass dieser Bereich der negativen Elektrode und/oder der positiven Elektrode mit metallischem Lithium und/oder einem lithiumhaltigen Material beaufschlagt ist. Das in diesem Bereich bevorratete Lithium dient im Laufe der Betriebsdauer der erfindungsgemäßen Lithium-Ionen-Zelle als Depot für Lithium, welches als mobiles Lithium in ionischer Form freigesetzt werden kann und für die Lade- und Entladezyklen der Lithium-Ionen-Zelle nach seiner Freisetzung zur Verfügung steht. Hierdurch kann die Lebensdauer der Lithium-Ionen-Zelle deutlich verbessert werden, da Alterungsprozesse, die auf einem Verlust von mobilem Lithium basieren, durch die Lithium-Reserve ausgeglichen werden können.

In jedem Fall unterscheiden sich das metallische Lithium oder das lithiumhaltige Material der Lithium-Reserve stofflich von der elektrochemisch aktiven Komponente, die ja in der Regel gleichfalls Lithium, gegebenenfalls in ionischer Form, enthält (siehe unten). Das Lithium-Depot umfasst bevorzugt also keine lithiumhaltige Legierung oder Verbindung, die Bestandteil der elektrochemisch aktiven Komponente ist.

Die Anordnung der Lithium-Reserve unmittelbar auf den Stromkollektoren, also gewissermaßen innerhalb der negativen Elektrode und/oder der positiven Elektrode, hat vor allem im Hinblick auf die optimale Ausnutzung der Geometrie der Lithium-Ionen-Zelle besondere Vorteile. Durch die Anordnung der Lithium-Reserve direkt auf einem Bereich des Stromkollektors, der frei von elektrochemisch aktiver Komponente ist, kann der Platz innerhalb der Lithium-Ionen-Zelle optimal genutzt werden, ohne dass die Lithium-Reserve zusätzlichen Raum innerhalb der Lithium-Ionen-Zelle in Anspruch nehmen würde. Der Bereich für die Lithium-Reserve kann dabei so gewählt werden, dass es nicht zu geometrischen Kollisionen mit anderen Elementen der Lithium-Ionen-Zelle kommt. So kann beispielsweise die in der EP 2 372 732 A1 beschriebene Anordnung des Lithium-Depots die Gefahr elektrischer Kurzschlüsse in Folge eines Kontakts des Lithium-Depots mit Rändern entgegengesetzt polarisierter Elektroden erhöhen. Die Ausbildung des Lithium-Depots gemäß dervorliegenden Erfindung kann bereits bei der Herstellung der Elektroden erfolgen. Es sind damit zu einem späteren Zeitpunkt keine separaten Schritte zur Ausbildung und Platzierung des Depots mehr erforderlich.

Der Anodenstromkollektor und der Kathodenstromkollektor der negativen bzw. positiven Elektrode(n) sind bevorzugt flächige Metallsubstrate, beispielsweise aus Metallfolien oder aus einem Metallschaum oder aus einem Metallnetz oder einem Metallgitter oder einem metallisierten Vlies. Als Metall für den Anodenstromkollektor eignen sich beispielsweise Kupfer oder Nickel oder auch andere elektrisch leitfähige Materialien. Als Metall für den Kathodenstromkollektor eignen sich beispielsweise Aluminium oder auch andere elektrisch leitfähige Materialien.

Als elektrochemisch aktive Komponenten für die negative Elektrode und die positive Elektrode können dem Fachmann bekannte Materialien eingesetzt werden. Für die negative Elektrode können insbesondere Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich können auch metallische und halbmetallische Materialien, die mit Lithium legierbar sind, zum Einsatz kommen, beispielsweise unter Verwendung der Elemente Zinn, Antimon und Silizium, die in der Lage sind, mit Lithium intermetallische Phasen zu bilden. Auch diese Materialien kommen bevorzugt in Partikelform zum Einsatz. Für die positive Elektrode können als elektrochemisch aktive Komponenten beispielsweise Lithium-MetalloxidVerbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x+y+z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden.

Die partikelförmigen elektrochemisch aktiven Komponenten sind bevorzugt in eine Matrix aus dem erwähnten Elektrodenbinder eingebettet, wobei benachbarte Partikel in der Matrix bevorzugt in unmittelbarem Kontakt miteinander stehen.

In besonders bevorzugter Weise werden als Anoden- und(oder als Kathodenstromkollektor strukturierte Stromkollektoren verwendet, beispielsweise gelochte oder anderweitig mit Durchbrechungen versehene Metallfolien oder Metallnetze oder Metallgitter oder metallische oder metallisierte Vliese oder offenporige Metallschäume. Dies hat den besonderen Vorteil, dass die aus der Lithium-Reserve später freigesetzten Lithiumionen besonders gut in der gesamten Lithium-Ionen-Zelle wandern und in gleichmäßiger Weise über die gesamte Lithium-Ionen-Zelle verteilt werden können.

Neben den genannten Elementen umfasst die erfindungsgemäße sekundäre elektrochemische Lithium-Ionen-Zelle zweckmäßigerweise auch ein Gehäuse, das die Elektroden bevorzugt gas- und/oderflüssigkeitsdicht umschließt.

In einigen bevorzugten Ausgestaltungen umfasst die Zelle einen elektrischen Leiter zur elektrischen Kontaktierung der negativen Elektrode und/oder einen elektrischen Leiter zur elektrischen Kontaktierung der positiven Elektrode, um eine elektrische Kontaktierung der Elektroden zu ermöglichen. Ein Ende dieser elektrischen Leiter kann mit dem Anoden- oder dem Kathodenstromkollektor verschweißt sein. Ein anderes Ende kann mit einem Gehäuseteil verschweißt oder durch eine Poldurchführung aus dem Gehäuse herausgeführt sein.

In anderen Ausführungsformen kann auch eine direkte Kontaktierung der Elektroden mit dem Gehäuse oder mit Teilen des Gehäuses vorgesehen sein. Dies ist besonders bevorzugt und wird noch gesondert abgehandelt.

Weiterhin umfasst die Lithium-Ionen-Zelle zweckmäßigerweise wenigstens einen Separator zur Trennung von positiver und negativer Elektrode in an sich bekannter Weise.

Weiterhin umfasst die Zelle wenigstens einen an sich üblichen Elektrolyten, insbesondere auf der Basis mindestens eines Lithiumsalzes wie beispielsweise Lithiumhexafluorophosphat, das in einem organischen Lösungsmittel gelöst vorliegt (z. B. in einer Mischung organischer Carbonate). Für die Ausgestaltung der erfindungsgemäßen Lithium-Ionen-Zelle ist es besonders vorteilhaft, wenn der Bereich mit der Lithium-Reserve in ionischem Kontakt mit dem Elektrolyten steht, damit die aus der Lithium-Reserve freigesetzten Lithiumionen direkt für die elektrochemischen Vorgänge in der Zelle zur Verfügung stehen.

Mit der Integration einer Lithium-Reserve in einen Elektrodenwickel oder einen Elektrodenstapel kann die Zyklenlebensdauer der Lithium-Ionen-Zelle verlängert und in besonders bevorzugter Weise auch die Energiedichte erhöht werden. Dem liegt zugrunde, dass im Allgemeinen ein lebensdauerlimitierender Alterungsprozess von Lithium-Ionen-Zellen durch den Verlust an mobilem Lithium begründet ist. Durch die Einbringung einer Lithium-Reserve auf nicht beschichtete Bereiche (bezogen auf die Beschichtung mit elektrochemisch aktiven Komponenten) der negativen Elektrode und/oder der positiven Elektrode, vorzugsweise nur der negativen Elektrode, kann diese Lithium-Reserve bzw. eine entsprechende Prälithiierung dieser Bereiche über die Zyklenlebensdauer der Lithium-Ionen-Zelle als Reservoir für mobiles Lithium dienen.

Darüber hinaus können gerade im Falle von siliziumhaltigen negativen Elektroden auch die Energiedichte gesteigert und damit Kosten reduziert werden, da bei der erfindungsgemäßen Lithium-Ionen-Zelle im Allgemeinen weniger Kathodenmaterial, welches in der Regel als Lithiumquelle dient, notwendig ist. In besonders bevorzugter Weise handelt es sich daher bei der negativen Elektrode um eine siliziumhaltige Elektrode bzw. um eine Kompositelektrode, die mit siliziumhaltigem elektrochemisch aktivem Material beschichtet ist.

In einer bevorzugten Weiterbildung zeichnet sich die erfindungsgemäße Lithium-Ionen-Zelle durch mindestens eines der unmittelbar folgenden Merkmale a. bis c. aus:
a. Die als Kompositelektrode ausgebildete negative Elektrode und die als Kompositelektrode ausgebildete positive Elektrode sindjeweils bandförmig.
b. Die negative Elektrode und die positive Elektrode sind durch einen Separator voneinander getrennt.
c. Die negative Elektrode und die positive Elektrode sind Bestandteile eines Wickels.

Es ist besonders bevorzugt, dass die unmittelbar vorstehenden Merkmale a. bis c. in Kombination miteinander verwirklicht sind.

In dieser besonders bevorzugten Ausgestaltung bilden die negative Elektrode und die positive Elektrode gemeinsam mit dem Separator einen Verbund, der zu einem Wickel, insbesondere einem spiralförmigen Wickel, verarbeitet ist. Ein solcher Wickel ist bevorzugt zylindrisch ausgebildet und weist zwei endständige, bevorzugt eben ausgebildete Stirnseiten auf. Die Bereitstellung der Elektroden in Form eines solchen Wickels erlaubt eine besonders vorteilhafte Anordnung der Elektroden in zylindrischen Gehäusen.

In einer bevorzugten Weiterbildung zeichnet sich die erfindungsgemäße Lithium-Ionen-Zelle durch mindestens eines der unmittelbar folgenden Merkmale a. und b. aus:
a. Der Bereich befindet sich an einem Längsende der bandförmigen negativen Elektrode und/oder der bandförmigen positiven Elektrode.
b. Der Bereich mit der Lithium-Reserve bildet eine äußere Seite des Wickels und/oder begrenzt einen Hohlraum im Zentrum des Wickels.

Es ist besonders bevorzugt, dass die unmittelbar vorstehenden Merkmale a. und b. in Kombination miteinander verwirklicht sind.

Die äußere Seite des Wickels kann beispielsweise von der negativen Elektrode gebildet werden. Der Bereich mit der Lithium-Reserve kann einen Teil dieser äußeren Seite oder die vollständige äußere Seite des Wickels einnehmen. Vorzugsweise ist hierbei der Bereich der Lithium-Reserve nur auf der äußeren Seite des Anodenstromkollektors und nicht auf der inneren Seite des Anodenstromkollektors aufgebracht, so dass die innere Seite der Elektrode der äußeren Wicklung in üblicher Weise mit der elektrochemisch aktiven Komponente beschichtet ist.

Alternativ oder zusätzlich kann sich der Bereich mit der Lithium-Reserve im Kern des Wickels befinden. Insbesondere diese Positionen des Bereichs für die Lithium-Reserve sind besonders vorteilhaft, da diese Bereiche in der Regel ungenutzt sind und insofern die Ausnutzung dieser Bereiche für eine Lithium-Reserve besonders vorteilhaft und ökonomisch sind.

In eineralternativen bevorzugten Weiterbildungzeichnet sich die erfindungsgemäße Lithium-Ionen-Zelle durch mindestens eines der unmittelbar folgenden Merkmale a. bis c. aus:
a. Die als Kompositelektrode ausgebildete negative Elektrode und die als Kompositelektrode ausgebildete positive Elektrode sind Bestandteil eines Stapels, in dem sie übereinander angeordnet sind.
b. Die negative Elektrode und die positive Elektrode sind durch einen Separator voneinander getrennt.
c. Der als Lithium-Reserve ausgebildete Bereich befindet sich an einem Rand der bandförmigen negativen Elektrode und/oder der bandförmigen positiven Elektrode.

Es ist besonders bevorzugt, dass die unmittelbar vorstehenden Merkmale a. bis c. in Kombination miteinander verwirklicht sind.

Auch diese Form der Anordnung von negativer/n Elektrode(n) und positiver/n Elektrode(n) kann für verschiedene Geometrien einer Lithium-Ionen-Zelle mit Vorteil genutzt werden, wobei mit dieser Anordnung der Elektroden insbesondere Lithium-Ionen-Zellen mit prismatischen Gehäusen hergestellt werden können.

In einer bevorzugten Weiterbildung zeichnet sich die erfindungsgemäße Lithium-Ionen-Zelle durch mindestens eines der unmittelbar folgenden Merkmale a. oder b. aus:
a. der Anodenstromkollektor und der Kathodenstromkollektor weisen jeweils zwei von einem umlaufenden Rand getrennte Flachseiten auf und sind beidseitig mit den elektrochemisch aktiven Komponenten beschichtet,
b. der als Lithium-Reserve ausgebildete Bereich befindet sich auf nur einer Flachseite des Anodenstromkollektors und/oder des Kathodenstromkollektors.

Es ist besonders bevorzugt, dass die unmittelbar vorstehenden Merkmale a. und b. in Kombination miteinander verwirklicht sind.

In besonders bevorzugten Ausgestaltungen der erfindungsgemäßen Lithium-Ionen-Zelle weisen sowohl der Anodenstromkollektor als auch der Kathodenstromkollektor die zwei Flachseiten auf, welche jeweils mit den jeweiligen elektrochemisch aktiven Komponenten beschichtet sind. Dabei befindet sich der Bereich mit der Lithium-Reserve bevorzugt auf nur einer der Flachseiten des Anodenstromkollektors und/oder des Kathodenstromkollektors.

In einer bevorzugten Weiterbildung zeichnet sich die erfindungsgemäße Lithium-Ionen-Zelle durch mindestens eines der unmittelbar folgenden Merkmale a. oder b. aus:
a. die Lithium-Ionen-Zelle umfasst ein Gehäuse, das die negativen Elektrode und die positiven Elektrode umschließt,
b. der als Lithium-Reserve ausgebildete Bereich der negativen Elektrode oder der positiven Elektrode ist dem Gehäuse der Lithium-Ionen-Zelle zugewandt.

Es ist besonders bevorzugt, dass die unmittelbar vorstehenden Merkmale a. und b. in Kombination miteinander verwirklicht sind.

Diese Ausgestaltung ist besonders vorteilhaft, da in der Regel diese Bereiche der Elektrode nicht zu den elektrochemischen Vorgängen in der Lithium-Ionen-Zelle beitragen und daher mit besonderem Vorteil für die Lithium-Reserve genutzt werden können. Demgemäß werden in dieser Ausführungsform insbesondere die Randbereiche der Elektrodenanordnung genutzt, um hier anstatt einer Beschichtung mit den elektrochemisch aktiven Komponenten eine Beschichtung mit lithiumhaltigen Material vorzunehmen.

In einer ganz besonders bevorzugten Ausgestaltung wird ausschließlich die negative Elektrode für die Ausbildung der Lithium-Reserve benutzt. In dieser Ausführungsform weist ausschließlich die negative Elektrode den wenigstens einen Bereich auf, in dem derAnodenstromkollektor zumindest teilweise frei von der elektrochemisch aktiven Komponente ist und wobei dieser Bereich als Lithium-Reserve ausgebildet ist.

In einer bevorzugten Weiterbildung zeichnet sich die erfindungsgemäße Lithium-Ionen-Zelle durch mindestens eines der unmittelbar folgenden Merkmale a. bis h. aus:
a. die Lithium-Reserve umfasst elektrochemisch aktives Lithium, das in dem als Lithium-Reserve ausgebildeten Bereich auf dem Anodenstromkollektor und/oder dem Kathodenstromkollektor angeordnet ist.
b. die Lithium-Reserve umfasst aktivierbares Lithium, das in dem als Lithium-Reserve ausgebildeten Bereich auf dem Anodenstromkollektor und/oder dem Kathodenstromkollektor angeordnet ist.
c. die Lithium-Reserve umfasst wenigstens eine lithiumhaltige Verbindung, insbesondere eine lithiumhaltige Legierung, die in dem als Lithium-Reserve ausgebildeten Bereich auf dem Anodenstromkollektor und/oder dem Kathodenstromkollektor angeordnet ist.
d. die Lithium-Reserve wird von einer Lithium-Folie gebildet, die in dem als Lithium-Reserve ausgebildeten Bereich auf dem Anodenstromkollektor und/oder dem Kathodenstromkollektor angeordnet ist.
e. die Lithium-Reserve wird von einem Lithium-Streifen gebildet, der in dem als Lithium-Reserve ausgebildeten Bereich auf dem Anodenstromkollektor und/oder dem Kathodenstromkollektor angeordnet ist.
f. die Lithium-Reserve wird von aufgedampftem Lithium oder lithiumhaltigem Material gebildet, das in dem als Lithium-Reserve ausgebildeten Bereich auf dem Anodenstromkollektor und/oder dem Kathodenstromkollektor angeordnet ist.
g. die Lithium-Reserve wird von gekapselten Lithium-Partikeln gebildet, die in dem als Lithium-Reserve ausgebildeten Bereich auf dem Anodenstromkollektor und/oder dem Kathodenstromkollektor angeordnet sind.
h. die Lithium-Reserve wird von einer Beschichtung gebildet, die in dem als Lithium-Reserve ausgebildeten Bereich auf dem Anodenstromkollektor und/oder dem Kathodenstromkollektor angeordnet ist.

Das Lithium oder die lithiumhaltigen Materialien können beispielsweise in Form einer Paste oder einer anderweitigen Beschichtung auf den entsprechenden Bereich der positiven Elektrode und/oder insbesondere der negativen Elektrode aufgebrachtwerden. Beispielsweise können hierfür gekapselte Lithium-Partikel wie SLMP (*Stabilized Lithium Metal Powder,* FMC Corporation, USA) eingesetzt werden.

In metallischer Form kann das Lithium beispielsweise elektrochemisch abgeschieden, aufgedampft oder aufgepresst werden.

In besonders bevorzugter Weise ist die Lithium-Reserve durch Zyklisierung aktivierbar.

Bei dem erfindungsgemäßen Energiespeicherelement kann es sich um eine Knopfzelle handeln. Knopfzellen sind zylindrisch ausgebildet und weisen eine Höhe auf, die geringer als ihr Durchmesser ist. Sie eignen sich zur Versorgung von kleinen elektronischen Geräten wie Uhren, Hörgeräten und kabellosen Kopfhörern mit elektrischer Energie.

Bevorzugt handelt es sich bei dem erfindungsgemäßen Energiespeicherelement um eine zylindrische Knopfzelle mit einer kreisrunden Oberseite, die zumindest in einem zentralen Teilbereich eben ausgebildet ist, und einer kreisrunden Unterseite, die zu mindest in einem zentralen Teilbereich eben ausgebildet ist, und einem dazwischen liegenden ringförmigen Mantel. Der kürzeste Abstand zwischen einem Punktauf dem ebenen Bereich oder Teilbereich derOberseite und einem Punkt auf dem Bereich oder Teilbereich der Unterseite liegt bevorzugt im Bereich von 4 mm bis 15 mm. Der maximale Abstand zwischen zwei Punkten auf dem Mantel der Knopfzelle liegt bevorzugt im Bereich von 5 mm bis 25 mm. Es gilt hierbei die Maßgabe, dass der maximale Abstand zwischen den zwei Punkten auf der Mantelseite größer ist als der Abstand zwischen den zwei Punkten auf der Ober- und der Unterseite.

Die Nennkapazität des als Knopfzelle ausgebildeten erfindungsgemäßen Energiespeicherelements beträgt in einer Ausführungsform als Lithium-Ionen-Zelle in der Regel bis zu 1500 mAh. Bevorzugt liegt die Nennkapazität im Bereich von 100 mAh bis 1000 mAh, besonders bevorzugt im Bereich von 100 bis 800 mAh.

Das erfindungsgemäße Energiespeicherelement kann auch eine zylindrische Rundzelle sein. Zylindrische Rundzellen weisen eine Höhe auf, die größer als ihr Durchmesser ist. Sie eignen sich zur Versorgung moderner Metering-, Sicherheits- und Automotiveapplikationen wie z.B. Strom-, Wasser-, Gaszähler, Heizkostenverbrauchsmessgeräte, medizinische Pipetten, Sensoren und Alarmsysteme, Hausalarmsysteme, Sensoren und Sensor-Netzwerke, Backupbatterien für Diebstahlschutzsysteme im Automobilbau mit elektrischer Energie.

Bevorzugt liegt die Höhe der Rundzellen im Bereich von 15 mm bis 150 mm. Der Durchmesser der zylindrischen Rundzellen liegt bevorzugt im Bereich von 10 mm bis 50 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen und Werkzeugen.

Die Nennkapazität des als zylindrische Rundzelle ausgebildeten erfindungsgemäßen Energiespeicherelements beträgt in einer Ausführungsform als Lithium-Ionen-Zelle in der Regel bis zu 6000 mAh. Mit dem Formfaktor von 21 x 70 hat die Zelle in einer Ausführungsform als Lithium-Ionen-Zelle bevorzugt eine Nennkapazität im Bereich von 2000 mAh bis 5000 mAh, besonders bevorzugt im Bereich von 3000 bis 4500 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen. In einer besonders bevorzugten Ausgestaltung ist die erfindungsgemäße Lithium-Ionen-Zelle derart ausgestaltet, dass die Elektroden in Form eines Wickels gemäß dem sogenannten Kontaktplattendesign ausgebildet sind, wie es insbesondere in der WO 2017/215900 A1 beschrieben ist. Auf die WO 2017/215900 A1 wird hiermit vollumfänglich Bezug genommen.

In besonders bevorzugten Ausführungsformen zeichnet sich die erfindungsgemäße Lithium-Ionen-Zelle dadurch aus, dass
- innerhalb des als Wickel vorliegenden Verbunds aus Elektroden und Separator die positive und die negative Elektrode versetzt zueinander angeordnet sind, so dass ein Längsrand des Anodenstromkollektors aus einer der endständigen Stirnseiten und ein Längsrand des Kathodenstromkollektors aus der anderen der endständigen Stirnseiten austritt,
- Die erfindungsgemäße Lithium-Ionen-Zelle eine metallische Kontaktplatte aufweist, die auf einem der Längsränder aufliegt, so dass sich eine linienartige Kontaktzone ergibt, und
- Die Kontaktplatte mit dem Längsrand entlang dieser linienartigen Kontaktzone durch Verschweißung verbunden ist.

Bei der Herstellung von Verbünden aus Elektroden und Separatoren wird üblicherweise darauf geachtet, dass es nicht zu einem einseitigen Überstehen entgegengesetzt gepolter Stromkollektoren kommt, da dies die Kurzschlussgefahr erhöhen kann. Bei der beschriebenen versetzten Anordnung ist die Kurzschlussgefahr jedoch minimiert, da die entgegengesetzt gepolten Stromkollektoren aus sich gegenüberliegenden Stirnseiten des Wickels oder des Stapels austreten.

Den aus der versetzten Anordnung resultierenden Überstand der Stromkollektoren kann man sich zunutze machen, indem man sie mittels eines entsprechenden Stromableiters bevorzugt über ihre gesamte Länge kontaktiert. Als Stromableiter kommt hierbei die erwähnte Kontaktplatte zum Einsatz. Dies kann den Innenwiderstand innerhalb der erfindungsgemäßen Zelle sehr deutlich senken. Die beschriebene Anordnung kann das Auftreten großer Ströme somit sehr gut abfangen. Mit minimiertem Innenwiderstand reduzieren sich thermische Verluste bei hohen Strömen. Zudem wird die Abfuhr thermischer Energie über die Pole begünstigt.

Die Kontaktplatte kann wiederum mit einem Pol der erfindungsgemäßen Zelle, beispielsweise einem Gehäusepol, verbunden sein.

Es gibt mehrere Möglichkeiten, wie die Kontaktplatte mit dem Längsrand verbunden werden kann.

Die Kontaktplatte kann mit dem Längsrand entlang der linienartigen Kontaktzone über mindestens eine Schweißnaht verbunden sein. Der Längsrand kann erfindungsgemäß einen oder mehrere Abschnitte, die jeweils über ihre gesamte Länge über eine Schweißnaht durchgehend mit der Kontaktplatte verbunden sind, umfassen.

In einer möglichen Weiterbildung können sich der / die mit der Kontaktplatte über ihre gesamte Länge durchgehend verbundenen Abschnitte über mindestens 25 %, bevorzugt über mindestens 50 %, besonders bevorzugt über mindestens 75 %, der Gesamtlänge des Längsrandes erstrecken.

Ganz besonders bevorzugt kann der Längsrand über seine gesamte Länge durchgehend mit der Kontaktplatte verschweißt sein.

In einigen bevorzugten Ausführungsformen weist die erfindungsgemäße Zelle mindestens eines der folgenden Merkmale auf:
- Die Kontaktplatte ist eine Metallplatte mit einer Dicke im Bereich von 200 µm bis 1000 µm, bevorzugt 400 - 500 µm.
- Die Kontaktplatte besteht aus Aluminium, Titan, Nickel, Edelstahl oder vernickeltem Stahl.

Die Kontaktplatte kann mindestens einen Schlitz und/oder mindestens eine Perforierung aufweisen. Diese dienen dazu, einer Verformung der Platte bei der Herstellung der Schweißverbindung entgegenzuwirken.

In bevorzugten Ausführungsformen hat die Kontaktplatte die Form einer Scheibe, insbesondere die Form einer kreisförmigen oder zumindest näherungsweise kreisförmigen Scheibe. Sie weist dann also einen äußeren kreisförmigen oderzumindest näherungsweise kreisförmigen Scheibenrand auf. Unter einer näherungsweise kreisförmigen Scheibe soll hierbei insbesondere eine Scheibe verstanden werden, die die Form eines Kreises mit mindestens einem abgetrennten Kreissegment, bevorzugt mit zwei bis vier abgetrennten Kreissegmenten, aufweist.

Besonders bevorzugt weist die erfindungsgemäße Zelle eine erste Kontaktplatte auf, die auf dem Längsrand des Anodenstromkollektors aufliegt, so dass sich eine linienartige erste Kontaktzone mit spiralförmiger Geometrie ergibt, und eine zweite Kontaktplatte, die auf dem Längsrand des Kathodenstromkollektors aufliegt, so dass sich eine linienartige zweite Kontaktzone mit spiralförmiger Geometrie ergibt. Bevorzugte sind beide Kontaktplatten mit einem Pol der erfindungsgemäßen Zelle, beispielsweise einem Gehäusepol, verbunden.

In besonders bevorzugten Ausführungsformen bestehen die erste Kontaktplatte und der Anodenstromkollektor beide aus dem gleichen Material. Dieses wird besonders bevorzugt aus der Gruppe mit Kupfer, Nickel, Titan, vernickeltem Stahl und Edelstahl gewählt.

Die zweite Kontaktplatte und der Kathodenstromkollektor bestehen besonders bevorzugt beide aus dem gleichen Material aus der Gruppe mit Aluminium, Titan und Edelstahl (z.B. vom Typ 1.4404).

Die Erfindung umfasst weiterhin einen Wickel oder Stapel für eine sekundäre elektrochemische Lithium-Ionen-Zelle. Der Wickel oder Stapel weist die folgenden Merkmale auf:
a. Der Wickel oder Stapel umfasst wenigstens eine Kompositelektrode als negative Elektrode, wobei die Kompositelektrode wenigstens einen Anodenstromkollektor und wenigstens eine elektrochemisch aktive Komponente, die Lithiumionen ein- und auszulagern vermag, umfasst.
b. Der Wickel oder Stapel umfasst wenigstens eine Kompositelektrode als positive Elektrode, wobei die Kompositelektrode wenigstens einen Kathodenstromkollektor und wenigstens eine elektrochemisch aktive Komponente, die Lithiumionen ein- und auszulagern vermag, umfasst.
c. Die negative Elektrode und die positive Elektrode sind durch einen Separator voneinander getrennt,
d. Die negative Elektrode und/oder die positive Elektrode weisen wenigstens einen Bereich auf, in dem der Anodenstromkollektor und/oder der Kathodenstromkollektor zumindest teilweise frei von der elektrochemisch aktiven Komponente ist und wobei dieser Bereich als Lithium-Reserve ausgebildet ist.

Bezüglich weiterer Merkmale dieses Wickels oder dieses Stapels und insbesondere im Hinblick auf die Ausbildung der Lithium-Reserve wird auf die obige Beschreibung verwiesen.

Weiterhin umfasst die Erfindung ein Verfahren zur Herstellung des beschriebenen Wickels oder des beschriebenen Stapels, der für eine sekundäre elektrochemische Lithium-Ionen-Zelle vorgesehen ist. Dieses Verfahren umfasst die folgenden Schritte:
a. Es wird eine Kompositelektrode als negative Elektrode bereitgestellt, indem ein bandförmiger und/oder flächiger Anodenstromkollektor mit wenigstens einer elektrochemisch aktiven Komponente, die Lithiumionen ein- und auszulagern vermag, beidseitig beschichtet wird.
b. Es wird eine Kompositelektrode als positive Elektrode bereitgestellt, indem ein bandförmiger und/oder flächiger Kathodenstromkollektor mit wenigstens einer elektrochemisch aktiven Komponente, die Lithiumionen ein- und auszulagern vermag, beidseitig beschichtet wird.
c. Bei der Beschichtung des Anodenstromkollektors und/oder des Kathodenstromkollektors mit der elektrochemisch aktiven Komponente wird wenigstens ein Bereich ausgespart, der nicht mit der jeweiligen elektrochemischen Komponente beschichtet wird.
d. Der wenigstens eine ausgesparte Bereich wird mit einem lithiumhaltigen Material zur Ausbildung einer Lithium-Reserve beaufschlagt.
e. Die negative und die positive Elektrode werden mit wenigstens einem Separator zu einem Wickel oder einem Stapel verarbeitet.

Bezüglich weiterer Merkmale dieses Herstellungsverfahrens insbesondere im Hinblick auf die Elektroden und den Bereich für die Lithium-Reserve wird auf die obige Beschreibung verwiesen.

Schließlich umfasst die Erfindung ein Verfahren zur Herstellung einer elektrochemischen Lithium-Ionen-Zelle in der oben beschriebenen Weise. Dieses Verfahren umfasst die folgenden Schritte:
a. Es wird ein Wickel oder Stapel bereitgestellt, wie es oben beschrieben ist.
b. Der Wickel oder Stapel wird in einem Gehäuse platziert.
c. Der Wickel oder Stapel wird mit wenigstens einem Elektrolyten versehen,
d. Die negative Elektrode und die positive Elektrode werden elektrisch mit dem Gehäuse oder mit durch das Gehäuse führbaren elektrischen Leitern kontaktiert,
e. Das Gehäuse wird geschlossen.

Bei dem Gehäuse handelt es sich insbesondere um ein für solche Zellen übliches Gehäuse, beispielsweise um ein Gehäuse für eine zylindrische Rundzelle oder eine Knopfzelle. Weiterhin umfasst das Verfahren bevorzugt eine elektrische Kontaktierung der negativen und der positiven Elektroden. Die elektrische Kontaktierung erfolgt in einigen bevorzugten Ausführungsformen mithilfe von separaten elektrischen Leitern. Es kann jedoch auch insbesondere im Fall des oben beschriebenen Kontaktplattendesigns vorgesehen sein, dass eine direkte Kontaktierung mit dem Gehäuse über die Kontaktplatten erfolgt.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Figuren zeigen:
- Fig. 1: schematische Ansicht einer negativen Elektrode und einer positiven Elektrode in Aufsicht gemäß einer bevorzugten Ausführungsform der Erfindung; und
- Fig. 2: schematische Ansicht einer negativen Elektrode und einer positiven Elektrode gemäß der in Fig. 1 dargestellten bevorzugten Ausführungsform der Erfindung im Querschnitt; und
- Fig. 3: schematische Darstellung einer in einem Gehäuse angeordneten Elektrodenanordnung in Form eines Wickels (Querschnitt) gemäß einer bevorzugten Ausführungsform der Erfindung.

### DETAILLIERTE BESCHREIBUNG DER AUSFÜHRUNGSBEISPIELE

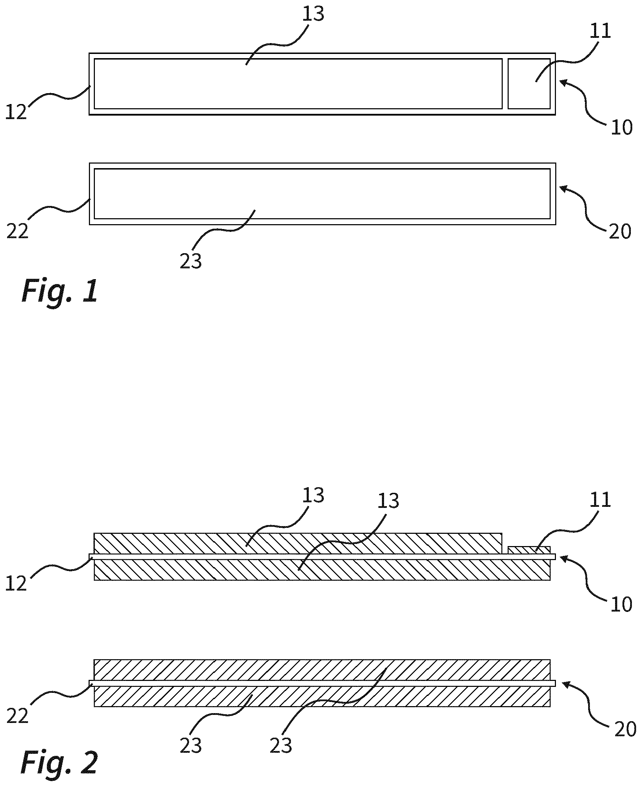

**Fig. 1** und **Fig. 2** illustrieren in schematischer Weise eine negative Elektrode 10 und eine positive Elektrode 20 in Aufsicht (Fig. 1) und im Querschnitt (Fig. 2). In diesem Ausführungsbeispiel weist die negative Elektrode 10, die bandförmig gestaltet ist, an einem Ende einen Bereich 11 auf, der als Lithium-Reserve ausgestaltet ist. Sowohl die negative Elektrode 10 als auch die positive Elektrode 20 sind als Kompositelektroden ausgebildet, wobei ein Anodenstromkollektor 12 im Fall der negativen Elektrode 10 und ein Kathodenstromkollektor 22 im Fall der positiven Elektrode 20 auf beiden Seiten mit einer elektrochemisch aktiven Komponente 13 bzw. 23 beschichtet sind. Bei der elektrochemisch aktiven Komponente 13 der negativen Elektrode 10 kann es sich beispielsweise um eine Mischung aus Silizium und Graphit und einem Elektrodenbinder handeln. Bei der elektrochemisch aktiven Komponente 23 der positiven Elektrode 20 handelt es sich beispielsweise um eine partikuläre Lithium-Metalloxid-Verbindung in einer Bindermatrix.

Bei der negativen Elektrode 10 befindet sich an einem Ende der bandförmigen Elektrode auf einer Seite des Anodenstromkollektors 12 der Bereich 11, der als Lithium-Reserve ausgebildet ist. Das im Bereich 11 enthaltene lithiumhaltige Material kann beispielsweise eine Lithium-Folie oder ein Lithium-Streifen sein. In anderen Ausführungsbeispielen kann es sich hier um aufgedampftes Lithium oder um Lithium-Substanzen in einer Paste oder in einer anderweitigen Beschichtung handeln. Beispielsweise kann das lithiumhaltige Material von gekapselten Lithium-Partikeln gebildet sein, die auf den Anodenstromkollektor 12 in Form einer Beschichtung aufgebracht werden.

Bei dem Anodenstromkollektor 12 und dem Kathodenstromkollektor 22 kann es sich um übliche elektrisch leitfähige Folien, insbesondere um metallische Folien oder Folienbänder, handeln. Fürdie negative Elektrode eignen sich hierfür insbesondere Kupfer oder Nickel. Für die positive Elektrode eignet sich hierfür insbesondere Aluminium. Bevorzugt liegen der Anodenstromkollektor und der Kathodenstromkollektor in strukturierter Form vor, beispielsweise gelocht oder als offenporiger Schaum.

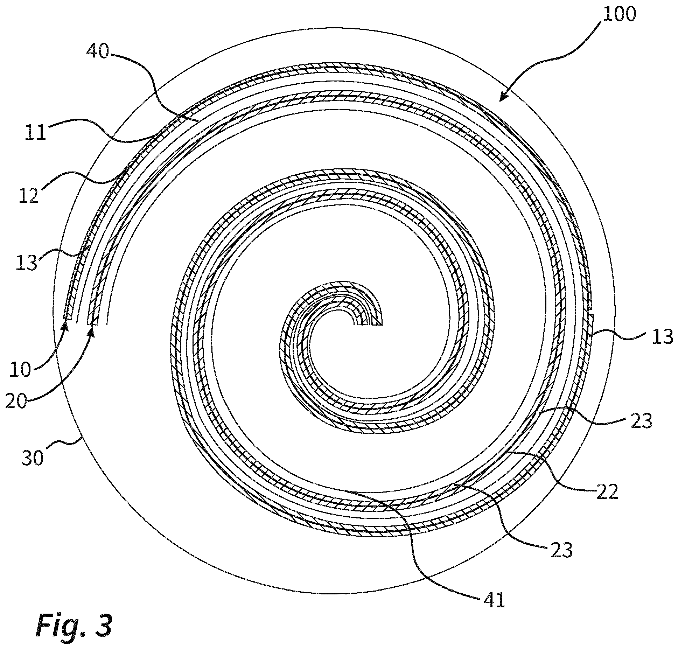

**Fig. 3** illustriert in schematischer Weise den Aufbau eines aus den Elektroden 10 und 20 gebildeten Wickels 100. Der Wickel 100 ist spiralförmig aufgebaut, wobei ein Verbund aus negativer Elektrode 10 und positiver Elektrode 20, die von einem Separator 40 voneinander getrennt sind, durch Wicklung um eine Wickelachse aufgebaut ist. Der besseren Übersicht wegen sind die Elektroden 10 und 20 sowie der Separator 40 beabstandet voneinander gezeichnet. Tatsächlich liegen sie unmittelbar aufeinander und sind beispielsweise durch Lamination miteinander verbunden. Die äußere Windung wird nach außen von der negativen Elektrode 10 gebildet, wobei die äußere Seite der negativen Elektrode 10 zum Teil einen Bereich 11 umfasst, der als Lithium-Reserve ausgebildet ist. In diesem Bereich ist die negative Elektrode 10 nicht mit elektrochemisch aktiver Komponente beschichtet, sondern ist stattdessen mit einem Lithium-Material beaufschlagt. Der äußere Bereich der negativen Elektrode 10 ist nicht der positiven Elektrode 20 zugewandt, sondern liegt der Innenseite des Gehäuses 30 gegenüber.

## Patentansprüche

1. Sekundäre elektrochemische Lithium-Ionen-Zelle mit den Merkmalen:
a. die Lithium-Ionen-Zelle umfasst wenigstens eine Kompositelektrode als negative Elektrode (10), wobei die Kompositelektrode wenigstens einen Anodenstromkollektor (12) und wenigstens eine elektrochemisch aktive Komponente (13), die Lithiumionen ein- und auszulagern vermag, umfasst,
b. die Lithium-Ionen-Zelle umfasst wenigstens eine Kompositelektrode als positive Elektrode (20), wobei die Kompositelektrode wenigstens einen Kathodenstromkollektor (22) und wenigstens eine elektrochemisch aktive Komponente (23), die Lithiumionen ein- und auszulagern vermag, umfasst,
**gekennzeichnet durch** das folgende Merkmal:
c. die negative Elektrode (10) und/oder die positive Elektrode (20) weist oder weisen wenigstens einen Bereich (11) auf, in dem der Anodenstromkollektor (12) und/oder der Kathodenstromkollektor (22) zumindest teilweise frei von der elektrochemisch aktiven Komponente ist und wobei dieser Bereich (11) als Lithium-Reserve ausgebildet ist.

2. Elektrochemische Lithium-Ionen-Zelle nach Anspruch 1 mit den folgenden zusätzlichen Merkmalen:
a. die als Kompositelektrode ausgebildete negative Elektrode (10) und die als Kompositelektrode ausgebildete positive Elektrode (20) sind jeweils bandförmig,
b. die negative Elektrode (10) und die positive Elektrode (20) sind durch einen Separator (40) voneinander getrennt,
c. die negative Elektrode (10) und die positive Elektrode (20) sind Bestandteile eines Wickels (100).

3. Elektrochemische Lithium-Ionen-Zelle nach Anspruch 2 mit den folgenden zusätzlichen Merkmalen:
a. der Bereich (11) befindet sich an einem Längsende der bandförmigen negativen Elektrode (10) und/oder der bandförmigen positiven Elektrode (20),
b. der Bereich (11) mit der Lithium-Reserve bildet eine äußere Seite des Wickels (100) und/oder begrenzt einen Hohlraum im Zentrum des Wickels (100).

4. Elektrochemische Lithium-Ionen-Zelle nach Anspruch 1 mit den folgenden zusätzlichen Merkmalen:
a. die als Kompositelektrode ausgebildete negative Elektrode (10) und die als Kompositelektrode ausgebildete positive Elektrode (20) sind Bestandteil eines Stapels, in dem sie übereinander angeordnet sind,
b. die negative Elektrode (10) und die positive Elektrode (20) sind durch einen Separator voneinander getrennt,
c. der Bereich (11) befindet sich an einem Rand der bandförmigen negativen Elektrode (10) und/oder der bandförmigen positiven Elektrode (20).

5. Elektrochemische Lithium-Ionen-Zelle nach einem der vorhergehenden Ansprüche mit den folgenden zusätzlichen Merkmalen:
a. der Anodenstromkollektor (12) und der Kathodenstromkollektor (22) weisen jeweils zwei von einem umlaufenden Rand getrennte Flachseiten auf und sind beidseitig mit den elektrochemisch aktiven Komponenten (13, 23) beschichtet,
b. der als Lithium-Reserve ausgebildete Bereich (11) befindet sich auf nur einer Flachseite des Anodenstromkollektors (12) und/oder des Kathodenstromkollektors (22).

6. Elektrochemische Lithium-Ionen-Zelle nach einem der vorhergehenden Ansprüche mit den folgenden zusätzlichen Merkmalen:
a. die Lithium-Ionen-Zelle umfasst ein Gehäuse (30), das die negative Elektrode (10) und die positive Elektrode (20) umschließt,
b. der Bereich (11) der negativen Elektrode (10) oder der positiven Elektrode (20), ist dem Gehäuse (30) der Lithium-Ionen-Zelle zugewandt.

7. Elektrochemische Lithium-Ionen-Zelle nach einem der vorhergehenden Ansprüche mit dem Merkmal:
a. ausschließlich die negative Elektrode (10) weist den als Lithium-Reserve ausgebildeten wenigstens einen Bereich (11) auf.

8. Elektrochemische Lithium-Ionen-Zelle nach einem der vorhergehenden Ansprüche mit mindestens einem der zusätzlichen folgenden Merkmale:
a. die Lithium-Reserve umfasst elektrochemisch aktives Lithium, das in dem Bereich (11) auf dem Anodenstromkollektor (12) und/oder dem Kathodenstromkollektor (22) angeordnet ist,
b. die Lithium-Reserve umfasst aktivierbares Lithium, das in dem Bereich (11) auf dem Anodenstromkollektor (12) und/oderdem Kathodenstromkollektor (22) angeordnet ist,
c. die Lithium-Reserve umfasst wenigstens eine lithiumhaltige Verbindung, insbesondere eine lithiumhaltige Legierung, die in dem Bereich (11) auf dem Anodenstromkollektor (12) und/oderdem Kathodenstromkollektor (22) angeordnet ist,
d. die Lithium-Reserve wird von einer Lithium-Folie gebildet, die in dem Bereich (11) auf dem Anodenstromkollektor (12) und/oder dem Kathodenstromkollektor (22) angeordnet ist,
e. die Lithium-Reserve wird von einem Lithium-Streifen gebildet, der in dem Bereich (11) auf dem Anodenstromkollektor (12) und/oder dem Kathodenstromkollektor (22) angeordnet ist,
f. die Lithium-Reserve wird von aufgedampftem Lithium oder lithiumhaltigem Material gebildet, das in dem Bereich (11) auf dem Anodenstromkollektor (12) und/oder dem Kathodenstromkollektor (22) angeordnet ist,
g. die Lithium-Reserve wird von gekapselten Lithium-Partikeln gebildet, die in dem Bereich (11) auf dem Anodenstromkollektor (12) und/oder dem Kathodenstromkollektor (22) angeordnet sind,
h. die Lithium-Reserve wird von einer Beschichtung gebildet, die in dem Bereich (11) auf dem Anodenstromkollektor (12) und/oder dem Kathodenstromkollektor (22) angeordnet ist.

9. Elektrochemische Lithium-Ionen-Zelle nach einem der vorhergehenden Ansprüche mit dem folgenden zusätzlichen Merkmal:
a. die Lithium-Reserve ist durch Zyklisierung aktivierbar.

10. Elektrochemische Lithium-Ionen-Zelle nach einem der vorhergehenden Ansprüche mit einem der folgenden Merkmale:
a. die Lithium-Ionen-Zelle ist eine zylindrische Rundzelle,
b. die Lithium-Ionen-Zelle ist eine Knopfzelle.

11. Elektrochemische Lithium-Ionen-Zelle nach einem der vorhergehenden Ansprüche mit den folgenden zusätzlichen Merkmalen:
a. die negative Elektrode (10) und die positive Elektrode (20) sind Bestandteile eines Wickels (100) gemäß Anspruch 2 oder Anspruch 3 oder eines Stapels gemäß Anspruch 4,
b. die negative Elektrode (10) und die positive Elektrode (20) sind innerhalb des Wickels (100) oder innerhalb des Stapels versetzt angeordnet, so dass ein Längsrand des Anodenstromkollektors (12) aus einer endständigen Stirnseite und ein Längsrand des Kathodenstromkollektors (22) aus einer anderen endständigen Stirnseite des Wickels oder des Stapels herausragt,
c. Der Längsrand des Anodenstromkollektors (12) und/oder der Längsrand des Kathodenstromkollektors (22) sind für eine Kontaktierung mit einem Teil eines Gehäuses der Lithium-Ionen-Zelle vorgesehen.

12. Wickel (100) oder Stapel für eine sekundäre elektrochemische Lithium-Ionen-Zelle, wobei der Wickel (100) oder Stapel folgende Merkmale aufweist:
a. der Wickel (100) oder Stapel umfasst wenigstens eine Kompositelektrode als negative Elektrode (10), wobei die Kompositelektrode wenigstens einen Anodenstromkollektor und wenigstens eine elektrochemisch aktive Komponente, die Lithiumionen ein- und auszulagern vermag, umfasst,
b. der Wickel (100) oder Stapel umfasst wenigstens eine Kompositelektrode als positive Elektrode (20), wobei die Kompositelektrode wenigstens einen Kathodenstromkollektor und wenigstens eine elektrochemisch aktive Komponente, die Lithiumionen ein- und auszulagern vermag, umfasst,
c. die negative Elektrode (10) und die positive Elektrode (20) sind durch einen Separator voneinander getrennt,
**gekennzeichnet durch** das folgende Merkmal:
d. die negative Elektrode (10) und/oder die positive Elektrode weisen wenigstens einen Bereich (11) auf, in dem der Anodenstromkollektor und/oder der Kathodenstromkollektor zumindest teilweise frei von der elektrochemisch aktiven Komponente ist und wobei dieser Bereich (11) als Lithium-Reserve ausgebildet ist.

13. Wickel oder Stapel nach Anspruch 12, wobei der Wickel (100) oder der Stapel weiter durch wenigstens eines der Merkmale gemäß Anspruch 2 bis 11 gekennzeichnet ist.

14. Verfahren zur Herstellung des Wickels (100) oder Stapels gemäß Anspruch 12 oder Anspruch 13 für eine sekundäre elektrochemische Lithium-Ionen-Zelle mit den folgenden Schritten:
a. es wird eine Kompositelektrode als negative Elektrode (10) bereitgestellt, indem ein bandförmiger und/oder flächiger Anodenstromkollektor (12) mit wenigstens einer elektrochemisch aktiven Komponente (13), die Lithiumionen ein- und auszulagern vermag, beidseitig beschichtet wird,
b. es wird eine Kompositelektrode als positive Elektrode (20) bereitgestellt, indem ein bandförmiger und/oder flächiger Kathodenstromkollektor (22) mit wenigstens einer elektrochemisch aktiven Komponente (23), die Lithiumionen ein- und auszulagern vermag, beidseitig beschichtet wird,
c. bei der Beschichtung des Anodenstromkollektors (12) und/oder des Kathodenstromkollektors (22) mit der elektrochemisch aktiven Komponente wird wenigstens ein Bereich (11) ausgespart, der nicht mit der jeweiligen elektrochemischen Komponente beschichtet wird,
d. der wenigstens eine ausgesparte Bereich (11) wird mit einem lithiumhaltigen Material zur Ausbildung einer Lithium-Reserve beaufschlagt,
e. die negative Elektrode (10) und die positive Elektrode (20) werden mit wenigstens einem Separator zu einem Wickel (100) oder einem Stapel verarbeitet.

15. Verfahren zur Herstellung einer elektrochemischen Lithium-Ionen-Zelle gemäß einem der Ansprüche 1 bis 11 mit den folgenden Schritten:
a. es wird ein gemäß Anspruch 14 herstellbarer Wickel (100) oder Stapel bereitgestellt,
b. der Wickel (100) oder Stapel wird in einem Gehäuse (30) platziert,
c. der Wickel (100) oder Stapel wird mit wenigstens einem Elektrolyten versehen,
d. die negative Elektrode (10) und die positive Elektrode (20) werden elektrisch mit dem Gehäuse (30) oder mit durch das Gehäuse (30) führbaren elektrischen Leitern kontaktiert,
e. das Gehäuse (30) wird geschlossen.
